# EUROPEAN PATENT APPLICATION

(11) **EP 4 471 461 A1**
(43) Date of publication of application: **04.12.2024**
(21) Application number: 22923609.6
(22) Date of filing: 23.12.2022
(51) Int. Cl.: G01S 19/42

(54) **ASSISTED POSITIONING METHOD AND APPARATUS, AND ELECTRONIC DEVICE AND STORAGE MEDIUM**

(30) Priority: 29.01.2022 CN 202210111552
(71) Applicant: Queclink Wireless Solutions Co., Ltd., Shanghai 201101 (CN)
(72) Inventor: NIU, Chuan, Shanghai 201101 (CN)
(74) Representative: Bandpay & Greuter
(86) International application number: PCT/CN2022/141657
(87) International publication number: WO 2023/142823

(57) **Abstract**

An assisted positioning method, an apparatus, an electronic device, and a storage medium. The assisted positioning method is applied to a server. First position information of a radio frequency tag sent by a first terminal device is received (S201), where the first position information is acquired when a distance between the first terminal device and the radio frequency tag is less than or equal to a preset distance; environmental information of a current position where the first terminal device is located is determined (S202) according to the first position information; a target satellite corresponding to the first terminal device is determined (S203) according to the environmental information, and identification information of the target satellite is sent to the first terminal device, where the identification information is used to indicate to the first terminal device to determine position information according to the target satellite. The first terminal device can acquire the first position information of the radio frequency tag, and the server can determine the target satellite according to the first position information, so that the first terminal device determines the position information, thereby improving the speed and accuracy of the first terminal device in acquiring the position information.

## Description

The present application claims priority to Chinese Patent Application No. 202210111552.4, filed with China National Intellectual Property Administration on January 29, 2022 and entitled "ASSISTED POSITIONING METHOD, APPARATUS, ELECTRONIC DEVICE AND STORAGE MEDIUM", which is hereby incorporated by reference in its entirety.

### TECHNICAL FIELD

The present application relates to the field of positioning technology and, in particular, to an assisted positioning method, an apparatus, an electronic device and a storage medium.

### BACKGROUND

With the widespread use of terminal devices, a user may use a terminal device to navigate by means of a positioning function provided by the terminal device. When using the terminal device for navigation, requirements for the accuracy and speed of terminal device positioning are also increasingly stringent.

In the prior art, a terminal device is mainly positioned through a global positioning system GPS. However, in a location with complex terrain and towering buildings, the towering buildings may block GPS signals of the global positioning system or generate a multipath effect, which makes the GPS signals weak and leads to lower positioning accuracy. In addition, in an area where the GPS signals are weak, the method of positioning through the global positioning system requires a lot of time when acquiring the GPS signals, resulting in lower speed of terminal device positioning.

### SUMMARY

Embodiments of the present application provide an assisted positioning method, an apparatus, an electronic device and a storage medium that can greatly improve the speed and accuracy of terminal device positioning.

In a first aspect, an embodiment of the present application provides an assisted positioning method, applied to a server, where the assisted positioning method includes:
receiving first position information of a radio frequency tag sent by a first terminal device, where the first position information is acquired when a distance between the first terminal device and the radio frequency tag is less than or equal to a preset distance;
determining environmental information of a current position where the first terminal device is located according to the first position information;
determining a target satellite corresponding to the first terminal device according to the environmental information, and sending identification information of the target satellite to the first terminal device, where the identification information is used to indicate to the first terminal device to determine position information according to the target satellite.

Optionally, determining the target satellite corresponding to the first terminal device according to the environmental information includes:
receiving first satellite information sent by the first terminal device, and receiving second satellite information sent by a second terminal device, where the first terminal device and the second terminal device are located in a same preset area;
screening the first satellite information and the second satellite information according to the environmental information to obtain target satellite information;
determining the target satellite corresponding to the first terminal device according to the target satellite information.

Optionally, screening the first satellite information and the second satellite information according to the environmental information to obtain the target satellite information includes:
simulating a location area where the first terminal device is located according to the environmental information to obtain a simulated environment;
determining satellite information of multiple to-be-processed satellites from the first satellite information and the second satellite information;
calculating a positioning contribution-rate weight corresponding to satellite information of each to-be-processed satellite in the satellite information of the multiple to-be-processed satellites in the simulated environment;
obtaining the target satellite information according to the positioning contribution-rate weight.

Optionally, obtaining the target satellite information according to the positioning contribution-rate weight includes:
arranging multiple positioning contribution-rate weights in a descending order to obtain a positioning contribution-rate weight sequence;
determining satellite information of to-be-processed satellites corresponding to a first preset number of positioning contribution-rate weights in the positioning contribution-rate weight sequence as the target satellite information.

In a second aspect, an embodiment of the present applicant provides an assisted positioning method, applied to a terminal device, where the assisted positioning method includes:
when a distance between the terminal device and a radio frequency tag installed in a preset position is less than or equal to a preset distance, controlling a signal receiver in the terminal device to read first position information of the radio frequency tag, where the first position information is pre-written information of an installation position of the radio frequency tag;
determining the first position information as temporary position information of the terminal device, uploading the first position information to a server so that the server determines environmental information of a current position where the terminal device is located according to the first position information, and determining position information of the terminal device according to the environmental information.

Optionally, the method further includes:
acquiring first satellite information of the current position where the terminal device is located;
uploading the first satellite information to the server, where the first satellite information is used to indicate to the server to perform screening processing on the first satellite information and multiple pieces of second satellite information according to the environmental information to obtain target satellite information and determine a target satellite corresponding to the terminal device according to the target satellite information;
receiving identification information of the target satellite sent by the server;
optimizing a first satellite corresponding to the first satellite information according to the identification information of the target satellite to obtain a to-be-used satellite, and storing the to-be-used satellite, where the to-be-used satellite is used to indicate to the terminal device to determine the position information according to the to-be-used satellite.

Optionally, optimizing the first satellite corresponding to the first satellite information according to the identification information of the target satellite to obtain the to-be-used satellite includes:
acquiring identification information of the first satellite in the first satellite information;
comparing the identification information of the target satellite with the identification information of the first satellite to determine identification information of a to-be-locked satellite, where the identification information of the to-be-locked satellite is included in the identification information of the target satellite and not included in the identification information of the first satellite;
searching for the to-be-locked satellite according to the identification information of the to-be-locked satellite, and locking the to-be-locked satellite.

In a third aspect, an embodiment of the present applicant provides an assisted positioning apparatus, including:
a receiving module, configured to receive first position information of a radio frequency tag sent by a first terminal device, where the first position information is acquired when a distance between the first terminal device and the radio frequency tag is less than or equal to a preset distance;
a determining module, configured to determine environmental information of a current position where the first terminal device is located according to the first position information;
the determining module is further configured to determine a target satellite corresponding to the first terminal device according to the environmental information, and send identification information of the target satellite to the first terminal device, where the identification information of the target satellite is used to indicate to the first terminal device to determine position information according to the target satellite.

Optionally, the determining module is specifically configured to: receive first satellite information sent by the first terminal device, and receive second satellite information sent by a second terminal device, where the first terminal device and the second terminal device are located in a same preset area; screen the first satellite information and the second satellite information according to the environmental information to obtain target satellite information; and determine the target satellite corresponding to the first terminal device according to the target satellite information.

Optionally, the determining module is specifically configured to: simulate a location area where the first terminal device is located according to the environmental information to obtain a simulated environment; determine satellite information of multiple to-be-processed satellites from the first satellite information and the second satellite information; calculate a positioning contribution-rate weight corresponding to satellite information of each to-be-processed satellite in the satellite information of the multiple to-be-processed satellites in the simulated environment; and obtain the target satellite information according to the positioning contribution-rate weight.

Optionally, the determining module is specifically configured to: arrange multiple positioning contribution-rate weights in a descending order to obtain a positioning contribution-rate weight sequence; and determine satellite information of to-be-processed satellites corresponding to a first preset number of positioning contribution-rate weights in the positioning contribution-rate weight sequence as the target satellite information.

In a fourth aspect, an embodiment of the present application provides an assisted positioning apparatus, including:
a controlling module, configured to: when a distance between a terminal device and a radio frequency tag installed in a preset position is less than or equal to a preset distance, control a signal receiver in the terminal device to read first position information of the radio frequency tag, where the first position information is pre-written information of an installation position of the radio frequency tag;
an uploading module, configured to determine the first position information as temporary position information of the terminal device, upload the first position information to a server so that the server determines environmental information of a current position where the terminal device is located according to the first position information, and determine position information of the terminal device according to the environmental information.

Optionally, the uploading module is further configured to: acquire first satellite information of the current position where the terminal device is located; upload the first satellite information to the server, where the first satellite information is used to indicate to the server to perform screening processing on the first satellite information and multiple pieces of second satellite information according to the environmental information to obtain target satellite information and determine a target satellite corresponding to the terminal device according to the target satellite information.

The apparatus further includes an optimizing module, configured to: receive identification information of the target satellite sent by the server; optimize a first satellite corresponding to the first satellite information according to the identification information of the target satellite to obtain a to-be-used satellite, and store the to-be-used satellite, where the to-be-used satellite is used to indicate to the terminal device to determine the position information according to the to-be-used satellite.

Optionally, the optimizing module is specifically configured to: acquire identification information of the first satellite in the first satellite information; compare the identification information of the target satellite with the identification information of the first satellite to determine identification information of a to-be-locked satellite, where the identification information of the to-be-locked satellite is included in the identification information of the target satellite and not included in the identification information of the first satellite; search for the to-be-locked satellite according to the identification information of the to-be-locked satellite, and lock the to-be-locked satellite.

In a fifth aspect, an embodiment of the present application further provides an electronic device, including: a processor and a memory connected communicatively to the processor;
the memory stores computer execution instructions;
the processor executes the computer execution instructions stored in the memory to implement the method described in any possible implementation of the above first aspect or the above second aspect.

In a sixth aspect, an embodiment of the present application further provides a computer-readable storage medium, where the computer-readable storage medium stores computer execution instructions, and when a processor executes the computer execution instructions, the method described in any possible implementation of the above first aspect or the above second aspect is implemented.

In a seventh aspect, an embodiment of the present application further provides a computer program product, including a computer program. When the computer program is executed by a processor, the method described in any possible implementation of the above first aspect or the above second aspect is implemented.

It can be seen that the embodiments of the present application provide an assisted positioning method, an apparatus, an electronic device, and a storage medium. The assisted positioning method is applied to the server. The first position information of the radio frequency tag sent by the first terminal device is received, where the first position information is acquired when the distance between the first terminal device and the radio frequency tag is less than or equal to the preset distance; the environmental information of the current position where the first terminal device is located is determined according to the first position information; the target satellite corresponding to the first terminal device is determined according to the environmental information, and the identification information of the target satellite is sent to the first terminal device, where the identification information is used to indicate to the first terminal device to determine the position information according to the target satellite. Since the distance between the first terminal device and the radio frequency tag is less than or equal to the preset distance, that is, the first position information of the radio frequency tag is position information of the current position where the first terminal device is located, the speed of acquiring the position information is improved. Moreover, the server can determine the target satellite according to the first position information, enabling the first terminal device to determine the position information according to the target satellite, thereby improving the accuracy of the first terminal device in acquiring the position information.

### BRIEF DESCRIPTION OF THE DRAWINGS

FIG. 1 is a schematic diagram of an application scenario of an assisted positioning method provided by an embodiment of the present application.
FIG. 2 is a schematic flowchart of an assisted positioning method applied to a server provided by an embodiment of the present application.
FIG. 3 is a schematic flowchart of an assisted positioning method applied to a terminal device provided by an embodiment of the present application.
FIG. 4 is a schematic framework diagram of a terminal device provided by an embodiment of the present application.
FIG. 5 is a schematic flowchart of an assisted positioning method provided by an embodiment of the present application.
FIG. 6 is a schematic structural diagram of an assisted positioning apparatus provided by an embodiment of the present application.
FIG. 7 is a schematic structural diagram of another assisted positioning apparatus provided by an embodiment of the present application.
FIG. 8 is a schematic structural diagram of an electronic device provided by the present application.

Definite embodiments of the present disclosure have been shown by the above accompanying drawings, and will be described in more detail later. These drawings and textual descriptions are not intended to limit the scope of the concepts of the present disclosure in any way, but rather to illustrate the concepts of the present disclosure to those skilled in the art by referring to specific embodiments.

### DESCRIPTION OF EMBODIMENTS

Exemplary embodiments will be described in detail here, and examples are shown in the accompanying drawings. When the following description involves drawings, unless otherwise indicated, same numbers in different drawings represent same or similar elements. Implementations described in the following exemplary embodiments do not represent all implementations consistent with the present disclosure. On the contrary, they are only examples of apparatuses and methods consistent with some aspects of the present disclosure as detailed in the appended claims.

In the embodiments of the present application, "at least one" refers to one or more, and "multiple" refers to two or more. "And/or" describes an association relationship of associated objects, indicating that three kinds of relationships may exist, for example, A and/or B may represent three situations: A exists alone, A and B exist at the same time, and B exists alone, where A and B may be singular or plural. In the textual descriptions of the present application, the character "/" generally indicates that the associated objects before and after the character is of an "or" relationship.

Technical solutions provided by the embodiments of the present application can be applied to a positioning scenario of a terminal device, especially in a location with towering buildings. At present, when positioning the terminal device, the terminal device is mainly positioned through a global positioning system GPS, so as to receive position information sent by GPS. However, in a location with complex terrain and towering buildings, the towering buildings may block GPS signals or generate a multipath effect, thereby resulting in lower positioning accuracy.

In the prior art, AGPS may be used to download satellite data, which can effectively save positioning time, but cannot solve the problem of poor positioning accuracy in an area with poor GPS signals. Or, a Kalman filtering method may be used, which is an algorithm of performing optimal estimation on a system state of the terminal device through input and output observation data of the system of the terminal device. Since the observation data includes influence of noise and interference in the system of the terminal device, the optimal estimation can also be seen as a filtering process. An advantage of this algorithm is to estimate a possible position of a subsequent maximum point based on previous data, but this method still relies on the GPS signals and cannot solve the problem of poor positioning speed and accuracy. Or, the positioning accuracy can be increased by adding a communication system for short-range low-frequency communication to calibrate signal errors through a surrounding device, or by adding a precision device such as a gyroscope. However, prices of the above devices are high, resulting in a waste of resources.

In order to solve the problem that the positioning speed and accuracy of the terminal device are poor due to geographical location or blocking by buildings in the prior art, positioning can be performed through radio frequency identification, i.e., radio frequency identification technology (Radio Frequency Identification, RFID). Exemplarily, a radio frequency tag can be installed in a building or an area with difficulty in positioning. Position information of a current position is preset and written in the radio frequency tag, so that when approaching the radio frequency tag, a terminal device automatically reads the position information in the radio frequency tag, and sends the read position information to a server, thereby enabling the server to locate the terminal device according to the position information. Since the radio frequency identification technology is an automatic identification technology, non-contact bidirectional data communication can be performed through radio frequency, and reading from and writing to recording media (an electronic tag or a radio frequency card) can be performed by using radio frequency, so as to realize target identification and data exchange. Therefore, assisted positioning through the radio frequency identification technology can enable the terminal device to quickly acquire the position information of the radio frequency tag, which can improve the speed of terminal device positioning. In addition, positioning the terminal device by the server according to the position information can improve the accuracy of terminal device positioning.

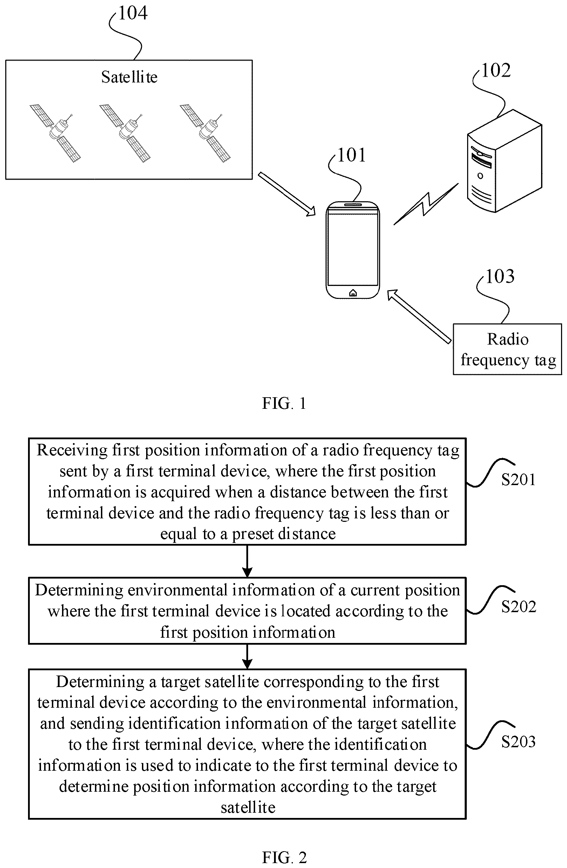

FIG. 1 is a schematic diagram of an application scenario of an assisted positioning method provided by an embodiment of the present application. As shown in FIG. 1, when a distance between a terminal device 101 and a radio frequency tag 103 is less than or equal to a preset distance, a signal receiver installed in the first terminal device 101 can directly read first position information pre-stored in the radio frequency tag 103. Moreover, when the terminal device 101 reads the first position information pre-stored in the radio frequency tag 103, the terminal device 101 can also acquire first satellite information of its current position through a satellite 104, and send the acquired first position information and the first satellite information to a server 102. When receiving the first position information and the first satellite information sent by the terminal device 101, the server 102 can determine environmental information of the current position where the terminal device is located according to the first position information, such as a direction of a street, a distribution of towering buildings and other information, so as to determine a target satellite according to the environmental information and the first satellite information, and send identification information of the target satellite to the terminal device, so that the terminal device can determine position information according to the target satellite.

It can be understood that the terminal device in the embodiments of the present application may be a mobile terminal device such as a mobile phone, a tablet, a tracker, etc. The present application only takes the terminal device shown in FIG. 1 as an example for description, and it does not mean that the embodiments of the present application are limited to this.

In the technical solutions provided by the embodiments of the present application, the terminal device can directly acquire the position information of the radio frequency tag. Since the distance between the terminal device and the radio frequency tag is less than or equal to the preset distance, the position information of the radio frequency tag can be approximated as the position information of the terminal device, thereby effectively improving the speed of terminal device positioning. In addition, the environmental information can be determined according to the first position information of the radio frequency tag, and thus the target satellite is determined, so that the terminal device can determine the position information according to the target satellite, thereby improving the accuracy of terminal device positioning.

Hereinafter, the assisted positioning method provided by the present application will be described in detail through specific embodiments. It can be understood that the following specific embodiments can be combined with each other, and the same or similar concepts or processes may not be repeated in some embodiments.

It can be understood that the assisted positioning method provided by the embodiments of the present application may be applied to a server or a terminal device. The technical solutions provided by the embodiments of the present application will be described below from perspectives when being applied to the server and the terminal device respectively.

FIG. 2 is a schematic flowchart of an assisted positioning method applied to a server provided by an embodiment of the present application. The assisted positioning method may be executed by a software and/or hardware apparatus. For example, the hardware apparatus may be an assisted positioning apparatus, and the assisted positioning apparatus may be a server or a processing chip in a server. Exemplarily, as shown in FIG. 2, this assisted positioning method may include the following steps.

S201, receiving first position information of a radio frequency tag sent by a first terminal device, where the first position information is acquired when a distance between the first terminal device and the radio frequency tag is less than or equal to a preset distance.

Exemplarily, the first position information may be latitude and longitude information of a current position where the radio frequency tag is located, or other position related information, and the embodiments of the present application do not make specific limitations on the first position information.

It can be understood that the first position information is acquired by the first terminal device when the distance between the first terminal device and the radio frequency tag is less than or equal to the preset distance, and the preset distance is the maximum distance that a signal receiver of the first terminal device can acquire the first position information of the radio frequency tag. Since the range of the maximum distance is small, for example, it may be 1 meter, the first position information can be used to represent position information of the first terminal device. The preset distance can be set according to an actual situation, which is not limited by the embodiments of the present application.

S202, determining environmental information of a current position where the first terminal device is located according to the first position information.

Exemplarily, when determining the environmental information of the current position where the first terminal device is located according to the first position information, the first position information can be inputted into a pre-trained model, and the model can store a mapping relationship between the environmental information and the first position information, so that the corresponding environmental information can be determined according to the first position information, and an environment around the first terminal device can be simulated according to the environmental information. The embodiments of the present application are only described by taking the above as an example, and it does not mean that the embodiments of the present application are limited to this.

S203, determining a target satellite corresponding to the first terminal device according to the environmental information, and sending identification information of the target satellite to the first terminal device, where the identification information is used to indicate to the first terminal device to determine position information according to the target satellite.

Exemplarily, when determining the target satellite corresponding to the first terminal device according to the environmental information, the server can receive first satellite information sent by the first terminal device and second satellite information sent by a second terminal device, screen the first satellite information and the second satellite information according to the environmental information to obtain target satellite information, and determine the target satellite corresponding to the first terminal device according to the target satellite information, where the first terminal device and the second terminal device are located in a same preset area.

Exemplarily, the first satellite information and the second satellite information can be acquired through a global navigation positioning system (Global Navigation Satellite System GNSS), which can further improve the speed of positioning. The second terminal device is a terminal device located in the same preset area as the first terminal device. For example, the second terminal device is a terminal device within a distance of 50 meters from the first terminal device, or both the first terminal device and the second terminal device are located in an area of a park. The embodiments of the present application do not make any limitation on the preset area.

In the embodiment of the present application, by determining the target satellite corresponding to the second terminal device through the first satellite information sent by the first terminal device and the second satellite information sent by the second terminal device that is located in the same preset area as the first terminal device, the accuracy of the determined target satellite can be effectively improved, thereby improving the accuracy of positioning of the first terminal device.

Exemplarily, when screening the first satellite information and the second satellite information according to the environmental information to obtain the target satellite information, a location area where the first terminal device is located can be simulated according to the environmental information to obtain a simulated environment; satellite information of multiple to-be-processed satellites is determined from the first satellite information and the second satellite information; a positioning contribution-rate weight corresponding to satellite information of each to-be-processed satellite in the satellite information of the multiple to-be-processed satellites is calculated in the simulated environment; and the target satellite information is obtained according to the positioning contribution-rate weight.

Exemplarily, when simulating the location area where the first terminal device is located according to the environmental information to obtain the simulated environment, simulation can be performed in a preset model to simulate a real environment of the location area where the first terminal device is located, such as simulating the distribution and height of towering buildings, the direction and length of streets, etc., and the embodiments of the present application do not make any limitation on the specific simulation process.

It can be understood that the first satellite information and the second satellite information each include information of at least one satellite, such as ephemeris data of a satellite. The multiple to-be-processed satellites are all satellites included in the first satellite information and the second satellite information. When calculating the positioning contribution-rate weight corresponding to the satellite information of each to-be-processed satellite in the satellite information of the multiple to-be-processed satellites in the simulated environment, the positioning contribution-rate weight corresponding to the satellite information of each to-be-processed satellite may be determined according to the influence of towering buildings, terrain conditions and others in the simulated environment on signals of each satellite, such as blocking situations. The embodiments of the present application do not make any limitation on the influence of the environment on the positioning contribution-rate weight of the satellite.

In the embodiment of the present application, by calculating the positioning contribution-rate weights corresponding to the satellite information of the multiple to-be-processed satellites in the first satellite information and the second satellite information in the simulated environment, and determining the target satellite according to the positioning contribution-rate weights, the accuracy of the determined target satellite can be improved, thereby improving the accuracy of the position information of the first terminal device.

Exemplarily, when obtaining the target satellite information according to the positioning contribution-rate weight, multiple positioning contribution-rate weights may be arranged in a descending order to obtain a positioning contribution-rate weight sequence; satellite information of to-be-processed satellites corresponding to the first preset number of positioning contribution-rate weights in the positioning contribution-rate weight sequence is determined as the target satellite information. The preset number can be set according to an actual situation, which is not limited by the embodiments of the present application.

In the embodiment of the present application, by determining the preset number of to-be-processed satellites with higher positioning contribution-rate weights as the target satellites, the determined target satellites have higher positioning contribution rates to the first terminal device, thereby improving the accuracy of positioning of the first terminal device.

It can be seen that in the assisted positioning method provided by the embodiment of the present application, the first position information of the radio frequency tag sent by the first terminal device is received, where the first position information is acquired when the distance between the first terminal device and the radio frequency tag is less than or equal to the preset distance; the environmental information of the current position where the first terminal device is located is determined according to the first position information; the target satellite corresponding to the first terminal device is determined according to the environmental information, and the identification information of the target satellite is sent to the first terminal device, where the identification information of the target satellite is used to indicate to the first terminal device to determine the position information according to the target satellite. In the technical solution provided by the embodiment of the present application, the first terminal device can acquire the first position information of the radio frequency tag when the distance between the first terminal device and the radio frequency tag is less than or equal to the preset distance, and the first position information is the same as the current position where the terminal device is located, that is, the first position information is the position information of the terminal device, which can improve the speed of the first terminal device in acquiring the position information. In addition, the server can determine the target satellite according to the first position information, enabling the first terminal device to determine the position information according to the target satellite, which can improve the accuracy of the first terminal device in acquiring the position information.

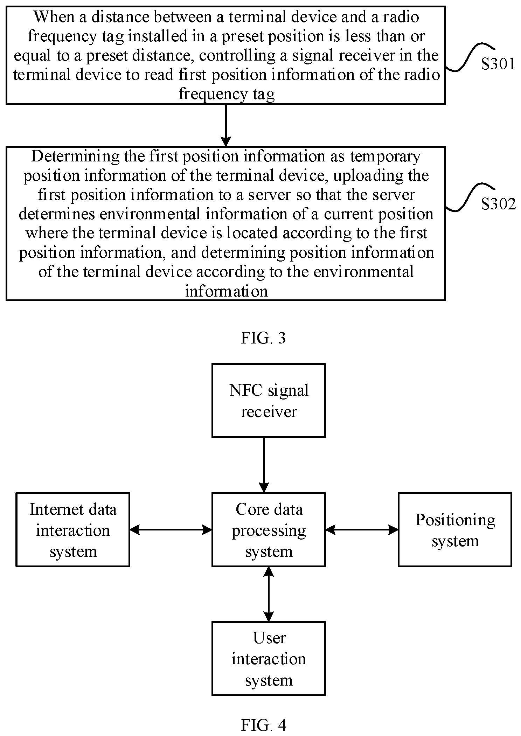

FIG. 3 is a schematic flowchart of an assisted positioning method applied to a terminal device provided by an embodiment of the present application. The assisted positioning method may be executed by a software and/or hardware apparatus, for example, the hardware apparatus may be an assisted positioning apparatus, and the assisted positioning apparatus may be a server or a processing chip in a server. Exemplarily, as shown in FIG. 3, this assisted positioning method may include the following steps.

S301, when a distance between a terminal device and a radio frequency tag installed in a preset position is less than or equal to a preset distance, controlling a signal receiver in the terminal device to read first position information of the radio frequency tag.

Exemplarily, the signal receiver may be a near field communication (Near Field Communication, NFC) signal receiver or other signal receivers, which is not limited in the embodiments of the present application. The preset distance may be set according to an actual situation, which is not limited in the embodiments of the present application. The radio frequency tag is a passive radio frequency tag, and may be fixed in buildings and other places that are convenient for pedestrians to locate.

It can be understood that when the distance between the terminal device and the radio frequency tag installed in the preset position is less than or equal to the preset distance, it indicates that the terminal device and the radio frequency tag are in the same position. That is, the first position information of the radio frequency tag can represent the current position where the terminal device is located.

S302, determining the first position information as temporary position information of the terminal device, uploading the first position information to a server so that the server determines environmental information of the current position where the terminal device is located according to the first position information, and determining position information of the terminal device according to the environmental information.

Exemplarily, the temporary position information can be displayed to a user as position information that is temporary when the terminal device cannot acquire accurate position information, thereby effectively improving the speed of acquiring the position information and improving user experience.

It can be seen that in the assisted positioning method provided by the embodiment of the present application, when the distance between the terminal device and the radio frequency tag installed in the preset position is less than or equal to the preset distance, the signal receiver in the terminal device is controlled to read the first position information of the radio frequency tag; the first position information is determined as the temporary position information of the terminal device and the first position information is uploaded to the server, so that the server determines the environmental information of the current position where the terminal device is located according to the first position information. In the technical solution provided in the embodiment of the present application, the terminal device can use the acquired first position information of the radio frequency tag as the temporary position information, so that a situation where the terminal device cannot acquire the position information or the accuracy of the acquired position information is poor can be avoided, and the position information of the terminal device can be quickly acquired. In addition, the first position information is sent to the terminal device, so that the server determines the environmental information of the current position where the terminal device is located according to the first position information, and then the position information of the terminal device is determined according to the environmental information, thereby effectively improving the accuracy of the terminal device positioning.

In another embodiment of the present application, the terminal device may: obtain first satellite information of the current position where the first terminal device is located; upload the first satellite information to the server, where the first satellite information is used to indicate to the server to perform screening processing on the first satellite information and multiple pieces of second satellite information according to the environmental information to obtain target satellite information, and determine a target satellite corresponding to the terminal device according to the target satellite information; receive identification information of the target satellite sent by the server; optimize a first satellite corresponding to the first satellite information according to the identification information of the target satellite to obtain a to-be-used satellite, and store the to-be-used satellite, where the to-be-used satellite is used to indicate to the terminal device to determine the position information according to the to-be-used satellite.

Exemplarily, the first position information may be encrypted latitude and longitude information that requires decryption processing by the terminal device to obtain, or the first position information may be unencrypted latitude and longitude information, which can be acquired directly. The embodiments of the present application do not make any limitation thereon.

Exemplarily, the first satellite information and the second satellite information may be satellite information acquired through a positioning system, or may be assisted global positioning system AGPS data requested from the server, and the embodiments of the present application do not make any limitation thereon. The method for acquiring the first satellite information and performing screening processing on the first satellite information and the multiple pieces of second satellite information can be found in the description of the above embodiments, and is not limited in the embodiments of the present application.

In the embodiment of the present application, the acquired first satellite information is uploaded to the server, the identification information of the target satellite sent by the server is received, and the first satellite corresponding to the first satellite information is optimized to obtain the to-be-used satellite, so that the position information is determined according to the to-be-used satellite, which can effectively improve the accuracy of the determined position information.

Exemplarily, when optimizing the first satellite corresponding to the first satellite information according to the identification information of the target satellite to obtain the to-be-used satellite, identification information of the first satellite in the first satellite information can be acquired; the identification information of the target satellite is compared with the identification information of the first satellite to determine identification information of a to-be-locked satellite, where the identification information of the to-be-locked satellite is included in the identification information of the target satellite and not included in the identification information of the first satellite; and the to-be-locked satellite is searched for according to the identification information of the to-be-locked satellite and locked.

For example, the identification information of the first satellite includes a second satellite, a third satellite and a sixth satellite, and the identification information of the target satellite is the third satellite, a fifth satellite and an eighth satellite. Then the fifth satellite and the eighth satellite are determined as the to-be-locked satellites, and the fifth satellite and the eighth satellite are locked.

In the embodiment of the present application, by searching for and locking the to-be-locked satellite included in the target satellite corresponding to the target satellite information and not included in the first satellite corresponding to the first satellite information, the accuracy of the terminal device positioning can be effectively improved.

In another embodiment of the present application, a composition of the terminal device can be seen in FIG. 4. FIG. 4 is a schematic framework diagram of a terminal device provided by an embodiment of the present application. As shown in FIG. 4, the terminal device includes an NFC signal receiver, a core data processing system, a positioning system, an Internet data interaction system and a user interaction system.

Exemplarily, when receiving a positioning request inputted by a user through the interaction system, the core data processing system can control the NFC signal receiver to use RFID technology to acquire first position information of a radio frequency tag whose distance from the NFC signal receiver is less than or equal to a preset distance and at the same time control the positioning system to acquire first satellite data of the terminal device, and send the received first position information sent by the NFC signal receiver and first satellite information sent by the positioning system to the Internet data interaction system. The Internet data interaction system sends the first position information and the first satellite information to a server.

Exemplarily, the Internet data interaction system can send received satellite information determined by the server according to the first position information and the first satellite information to the core data processing system. After processing the satellite information, the core system searches for and locks all target satellites, and determines position information of the terminal device. The current position information of the terminal device is displayed to the user through the user interaction system.

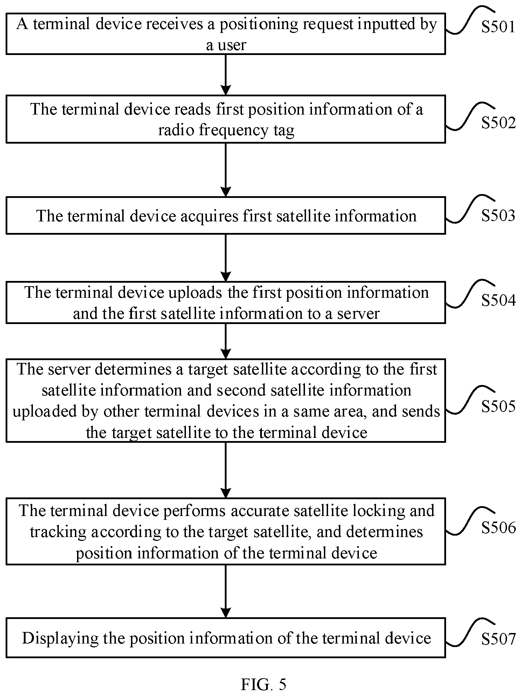

For ease of understanding of the assisted positioning method provided by the embodiments of the present application, hereinafter, the technical solutions provided by the embodiments of the present application will be described in detail by taking an interaction between a terminal device and a server as an example, as shown in FIG. 5. FIG. 5 is a schematic flowchart of an assisted positioning method provided by an embodiment of the present application. According to FIG. 5, the assisted positioning method may include the following steps.

S501, a terminal device receives a positioning request inputted by a user.

Exemplarily, as shown in FIG. 4, the terminal device may receive the positioning request inputted by the user through a user interaction system. For example, the user may input the positioning request by clicking on a control for acquiring positioning or the like on a display interface of the terminal device. The positioning request inputted by the user may be received through a core data processing system in the terminal device. The embodiments of the present application do not make any limitation on the manner in which the user inputs the positioning request.

Exemplarily, an application scenario of the embodiment of the present application may be in an urban street with towering buildings and a viaduct, where only half of the sky can be seen when looking up, or in an environment where both sides of the road are blocked by tall buildings and only a line of sky is left. A passive RFID radio frequency tag will be permanently fixed at a position in front of the building to facilitate positioning by pedestrians. When a distance between the terminal device and the RFID radio frequency tag is within 1 meter, the terminal device can directly read the first position information in the RFID radio frequency tag.

S502, the terminal device reads first position information of a radio frequency tag.

According to FIG. 3, the first position information of the radio frequency tag can be read through an NFC signal receiver of the terminal device, and the first position information of the radio frequency tag can be pre-written first position information corresponding to a current position of the radio frequency tag. For details, reference can be made to the relevant description of the first position information in the above embodiments, which will not be repeated in the embodiment of the present application here.

It can be understood that the NFC signal receiver sends the first position information to a core data processing system after reading the first position information.

S503, the terminal device acquires first satellite information.

Exemplarily, the terminal device may acquire the first satellite information through a positioning system, and the positioning system may be a global navigation positioning system GNSS or other positioning systems, which is not limited in the embodiments of the present application. After acquiring the first satellite information, the positioning system sends the first satellite information to the core data processing system. After receiving the first position information and the first satellite information, the core data processing system sends the first position information and the first satellite information to an Internet interaction system.

It can be understood that the GNSS positioning system can use GPS, BD, or GLONASS positioning receiver technology for positioning, which can be used outdoors and in remote mountainous areas with good signals. For areas with poor signals, assisted global positioning system AGPS data can be directly acquired from a server, and the assisted global positioning system AGPS data can be used as the first satellite information. The embodiments of the present application do not make any limitation on the manner of acquiring a first satellite.

It can be understood that the above steps 2 and 3 can be carried out simultaneously, and the embodiments of the present application do not make any limitation thereon.

S504, the terminal device uploads the first position information and the first satellite information to the server.

Exemplarily, the Internet interaction system in the terminal device may realize data exchange by using a 2G network, or a 3G network, or a 4G network, or a 5G network, or a wireless WIFI, etc., and upload the first position information and the first satellite information to the server.

S505, the server determines a target satellite according to the first satellite information and second satellite information uploaded by other terminal devices in the same area, and sends the target satellite to the terminal device.

Exemplarily, the method of determining the target satellite by the server according to the first satellite information and the second satellite information uploaded by other terminal devices in the same area can be found in the description of the above embodiments, which will not be repeated in the embodiment of the present application here. After determining the target satellite, the server sends the target satellite to the Internet data interaction system of the terminal device, which then sends it to the core data processing system. For example, the server sends top ten satellites with better positioning effects among all satellites corresponding to the first satellite information and the second satellite information to the core data processing system through the Internet data system.

S506, the terminal device performs accurate satellite locking and tracking according to the target satellite, and determines position information of the terminal device.

Exemplarily, the core data processing system of the terminal device can send the target satellite to the positioning system, and the positioning system performs time synchronization on the target satellite and satellites that can be searched out at present to ensure accurate satellite locking.

Exemplarily, the method of accurate satellite locking and tracking according to the target satellite can be found in the description of the above embodiments, which will not be repeated in the embodiment of the present application here.

S507, displaying the position information of the terminal device.

Exemplarily, when displaying the position information of the terminal device, the first position information of the radio frequency tag acquired through the NFC signal receiver can be displayed first, thereby achieving rapid display of the position information of the terminal device to the user. The first position information of the radio frequency tag can only be acquired when the distance between the NFC signal receiver and the video tag is within a certain range, and the distance range is small. Therefore, the first position information can be used to represent the position information of the terminal device.

In order to further improve the position information of terminal device, after the target satellite is determined, the target satellite can be used to acquire the position information of terminal device, thereby effectively improving the accuracy of the terminal device positioning.

In summary, using the technical solutions provided by the embodiments of the present application, real-time positioning anytime and anywhere can be achieved in most outdoor areas and road surfaces through a positioning device mainly based on GNSS positioning, and combined with the RFID technology, the speed and accuracy of the terminal device positioning can be effectively improved. In addition, pasting RFID chips in cities or on roads can be easily and quickly implemented, and RFIDs are passive antennas, which will not cause interference.

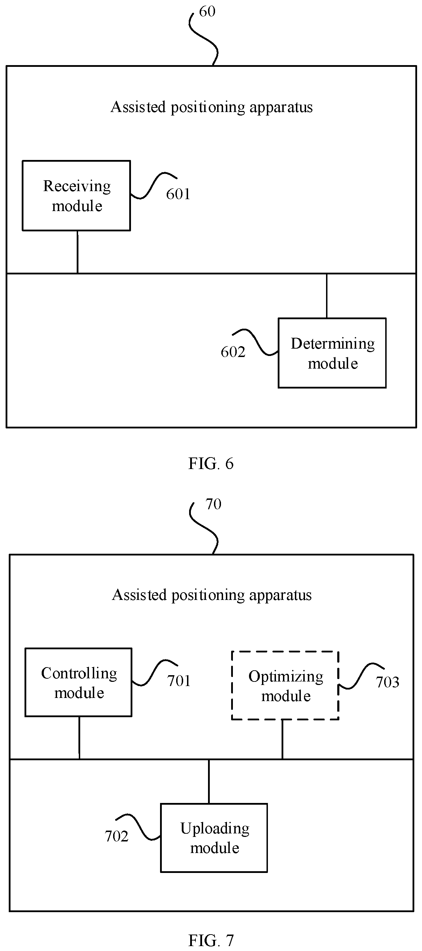

FIG. 6 is a schematic structural diagram of an assisted positioning apparatus provided by an embodiment of the present application. Exemplarily, as shown in FIG. 6, the assisted positioning device 60 may include:
a receiving module 601, configured to receive first position information of a radio frequency tag sent by a first terminal device, where the first position information is acquired when a distance between the first terminal device and the radio frequency tag is less than or equal to a preset distance;
a determining module 602, configured to determine environmental information of a current position where the first terminal device is located according to the first position information;
the determining module 601 is further configured to determine a target satellite corresponding to the first terminal device according to the environmental information, and send identification information of the target satellite to the first terminal device, where the identification information is used to indicate to the first terminal device to determine position information according to the target satellite.

Optionally, the determining module 602 is specifically configured to: receive first satellite information sent by the first terminal device, and receive second satellite information sent by a second terminal device, where the first terminal device and the second terminal device are located in a same preset area; screen the first satellite information and the second satellite information according to the environmental information to obtain target satellite information; and determine the target satellite corresponding to the first terminal device according to the target satellite information.

Optionally, the determining module 602 is specifically configured to: simulate a location area where the first terminal device is located according to the environmental information to obtain a simulated environment; determine satellite information of multiple to-be-processed satellites from the first satellite information and the second satellite information; calculate a positioning contribution-rate weight corresponding to satellite information of each to-be-processed satellite in the satellite information of the multiple to-be-processed satellites in the simulated environment; and obtain the target satellite information according to the positioning contribution-rate weight.

Optionally, the determining module 602 is specifically configured to: arrange multiple positioning contribution-rate weights in a descending order to obtain a positioning contribution-rate weight sequence; and determine satellite information of the to-be-processed satellite corresponding to a first preset number of positioning contribution-rate weights in the positioning contribution-rate weight sequence as the target satellite information.

The assisted positioning apparatus provided by the embodiment of the present application can execute the technical solution of the assisted positioning method according to any of the above embodiments, and its implementation principle and beneficial effects are similar to those of the assisted positioning method, so reference can be made to the implementation principle and beneficial effects of the assisted positioning method, which will not be repeated here.

FIG. 7 is a schematic structural diagram of another assisted positioning apparatus provided by an embodiment of the present application. Exemplarily, as shown in FIG. 7, the assisted positioning apparatus 70 may include:
a controlling module 701, configured to: when a distance between a terminal device and a radio frequency tag installed in a preset position is less than or equal to a preset distance, control a signal receiver in the terminal device to read first position information of the radio frequency tag, where the first position information is pre-written information of an installation position of the radio frequency tag;
an uploading module 702, configured to determine the first position information as temporary position information of the terminal device, upload the first position information to a server so that the server determines environmental information of a current position where the terminal device is located according to the first position information, and determine position information of the terminal device according to the environmental information.

Optionally, the uploading module 702 is further configured to: acquire first satellite information of the current position where the terminal device is located; upload the first satellite information to the server, where the first satellite information is used to indicate to the server to perform screening processing on the first satellite information and multiple pieces of second satellite information according to the environmental information to obtain target satellite information and determine a target satellite corresponding to the terminal device according to the target satellite information.

The apparatus further includes an optimizing module 703. The optimizing module 703 is configured to: receive identification information of the target satellite sent by the server; optimize a first satellite corresponding to the first satellite information according to the identification information of the target satellite to obtain a to-be-used satellite, and store the to-be-used satellite, where the to-be-used satellite is used to indicate to the terminal device to determine the position information according to the to-be-used satellite.

Optionally, the optimizing module 703 is specifically configured to: acquire identification information of the first satellite in the first satellite information; compare the identification information of the target satellite with the identification information of the first satellite to determine identification information of a to-be-locked satellite, where the identification information of the to-be-locked satellite is included in the identification information of the target satellite and not included in the identification information of the first satellite; search for the to-be-locked satellite according to the identification information of the to-be-locked satellite, and lock the to-be-locked satellite.

The assisted positioning apparatus provided by the embodiment of the present application can execute the technical solution of the assisted positioning method according to any of the above embodiments, and its implementation principle and beneficial effects are similar to those of the assisted positioning method, so reference can be made to the implementation principle and beneficial effects of the assisted positioning method, which will not be repeated here.

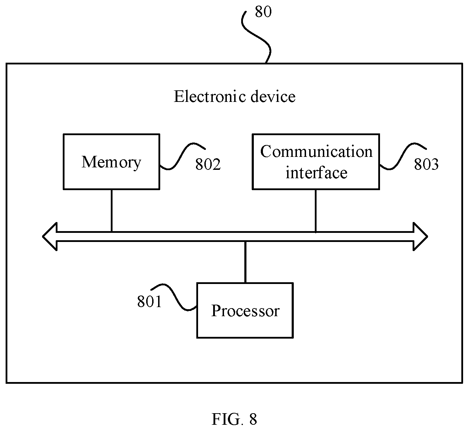

FIG. 8 is a schematic structural diagram of an electronic device provided by the present application. As shown in FIG. 8, the electronic device 800 may include at least one processor 801 and a memory 802.

The memory 802 is configured to store a program. Specifically, the program may include program code, and the program code includes computer operation instructions.

The memory 802 may include a high-speed RAM memory, and may also include a non-volatile memory (non-volatile memory), such as at least one disk memory.

The processor 801 is configured to execute the computer execution instructions stored in the memory 802 to implement the assisted positioning method according to the aforementioned method embodiments. The processor 801 may be a central processing unit (Central Processing Unit, CPU), an application specific integrated circuit (Application Specific Integrated Circuit, ASIC), or one or more integrated circuits configured to implement the embodiments of the present application. Specifically, when implementing the assisted positioning method according to the aforementioned method embodiments, the electronic device may be an electronic device with processing functions such as a terminal, a server, and the like.

Optionally, the electronic device 800 may further include a communication interface 803. In a specific implementation, if the communication interface 803, the memory 802 and the processor 801 are independently implemented, then the communication interface 803, the memory 802 and the processor 801 can be connected and communicate with each other through a bus. The bus may be an industry standard architecture (Industry Standard Architecture, ISA) bus, a peripheral component interconnect (Peripheral Component, PCI) bus, or an extended industry standard architecture (Extended Industry Standard Architecture, EISA) bus, etc. The buses may be classified into an address bus, a data bus, a control bus, etc., but it does not mean that there is only one bus or one type of buses.

Optionally, in a specific implementation, if the communication interface 803, the memory 802 and the processor 801 are integrated on one chip, then the communication interface 803, the memory 802 and the processor 801 can complete communication through an internal interface.

The present application further provides a computer-readable storage medium. The computer-readable storage medium may include various media that can store program code, such as a U-disk, a mobile hard disk, a read-only memory (ROM, Read-Only Memory), a random access memory (RAM, Random Access Memory), a disk or an optical disk. Specifically, the computer-readable storage medium stores program instructions, and the program instructions are used for the method in the above embodiments.

The present application further provides a program product, and the program product includes execution instructions stored in a readable storage medium. At least one processor of an electronic device can read the execution instructions from the readable storage medium, and the at least one processor executes the execution instructions to cause the electronic device to implement the assisted positioning method provided by the various implementations described above.

Finally, it should be noted that the above embodiments are only used to illustrate the technical solutions of the present application and not to limit it. Although the present application is described in detail with reference to the foregoing embodiments, those skilled in the art should understand that the technical solutions recorded in the aforementioned embodiments may be modified, or some or all of their technical features may be equivalently replaced. These modifications or replacements do not make the essence of corresponding technical solutions deviate from the scope of the technical solutions of the embodiments of the present application.

## Claims

1. An assisted positioning method, wherein the method is applied to a server, and the method comprises:
receiving first position information of a radio frequency tag sent by a first terminal device, wherein the first position information is acquired when a distance between the first terminal device and the radio frequency tag is less than or equal to a preset distance;
determining environmental information of a current position where the first terminal device is located according to the first position information;
determining a target satellite corresponding to the first terminal device according to the environmental information, and sending identification information of the target satellite to the first terminal device, wherein the identification information is used to indicate to the first terminal device to determine position information according to the target satellite.

2. The method according to claim 1, wherein determining the target satellite corresponding to the first terminal device according to the environmental information comprises:
receiving first satellite information sent by the first terminal device, and receiving second satellite information sent by a second terminal device, wherein the first terminal device and the second terminal device are located in a same preset area;
screening the first satellite information and the second satellite information according to the environmental information to obtain target satellite information;
determining the target satellite corresponding to the first terminal device according to the target satellite information.

3. The method according to claim 2, wherein screening the first satellite information and the second satellite information according to the environmental information to obtain the target satellite information comprises:
simulating a location area where the first terminal device is located according to the environmental information to obtain a simulated environment;
determining satellite information of multiple to-be-processed satellites from the first satellite information and the second satellite information;
calculating a positioning contribution-rate weight corresponding to satellite information of each to-be-processed satellite in the satellite information of the multiple to-be-processed satellites in the simulated environment;
obtaining the target satellite information according to the positioning contribution-rate weight.

4. The method according to claim 3, wherein obtaining the target satellite information according to the positioning contribution-rate weight comprises:
arranging multiple positioning contribution-rate weights in a descending order to obtain a positioning contribution-rate weight sequence;
determining satellite information of to-be-processed satellites corresponding to a first preset number of positioning contribution-rate weights in the positioning contribution-rate weight sequence as the target satellite information.

5. An assisted positioning method, wherein the method is applied to a terminal device, and the method comprises:
when a distance between the terminal device and a radio frequency tag installed in a preset position is less than or equal to a preset distance, controlling a signal receiver in the terminal device to read first position information of the radio frequency tag;
determining the first position information as temporary position information of the terminal device, uploading the first position information to a server so that the server determines environmental information of a current position where the terminal device is located according to the first position information, and determining position information of the terminal device according to the environmental information.

6. The method according to claim 5, further comprising:
acquiring first satellite information of the current position where the terminal device is located;
uploading the first satellite information to the server, wherein the first satellite information is used to indicate to the server to perform screening processing on the first satellite information and multiple pieces of second satellite information according to the environmental information to obtain target satellite information and determine a target satellite corresponding to the terminal device according to the target satellite information;
receiving identification information of the target satellite sent by the server;
optimizing a first satellite corresponding to the first satellite information according to the identification information of the target satellite to obtain a to-be-used satellite, and storing the to-be-used satellite, wherein the to-be-used satellite is used to indicate to the terminal device to determine the position information according to the to-be-used satellite.

7. The method according to claim 6, wherein optimizing the first satellite corresponding to the first satellite information according to the identification information of the target satellite to obtain the to-be-used satellite comprises:
acquiring identification information of the first satellite in the first satellite information;
comparing the identification information of the target satellite with the identification information of the first satellite to determine identification information of a to-be-locked satellite, wherein the identification information of the to-be-locked satellite is comprised in the identification information of the target satellite and not comprised in the identification information of the first satellite;
searching for the to-be-locked satellite according to the identification information of the to-be-locked satellite, and locking the to-be-locked satellite.

8. An assisted positioning apparatus, comprising:
a receiving module, configured to receive first position information of a radio frequency tag sent by a first terminal device, wherein the first position information is acquired when a distance between the first terminal device and the radio frequency tag is less than or equal to a preset distance;
a determining module, configured to determine environmental information of a current position where the first terminal device is located according to the first position information;
the determining module is further configured to determine a target satellite corresponding to the first terminal device according to the environmental information, and send identification information of the target satellite to the first terminal device, wherein the identification information of the target satellite is used to indicate to the first terminal device to determine position information according to the target satellite.

9. An assisted positioning apparatus, comprising:
a controlling module, configured to: when a distance between a terminal device and a radio frequency tag installed in a preset position is less than or equal to a preset distance, control a signal receiver in the terminal device to read first position information of the radio frequency tag, wherein the first position information is pre-written information of an installation position of the radio frequency tag;
an uploading module, configured to determine the first position information as temporary position information of the terminal device and upload the first position information to a server, so that the server determines environmental information of a current position where the terminal device is located according to the first position information.

10. An electronic device, comprising: a processor and a memory connected communicatively to the processor;
the memory stores computer execution instructions;
the processor executes the computer execution instructions stored in the memory to implement the method according to any one of claims 1-7.

11. A computer-readable storage medium, wherein the computer-readable storage medium stores computer execution instructions, and when the computer execution instructions are executed by a processor, the method according to any one of claims 1-7 is implemented.

12. A computer program product, comprising a computer program, wherein when the computer program is executed by a processor, the method according to any one of claims 1-7 is implemented.
